(19) Europäisches Patentamt
European Patent Office
Office européen des brevets

(11) **EP 2 963 391 B1**

(12) **EUROPÄISCHE PATENTSCHRIFT**

(45) Veröffentlichungstag und Bekanntmachung des Hinweises auf die Patenterteilung:
**09.08.2017   Patentblatt 2017/32**

(51) Int Cl.:
*G01D 5/245* (2006.01)          *G01D 5/38* (2006.01)

(21) Anmeldenummer: **15171191.8**

(22) Anmeldetag: **09.06.2015**

(54) **POSITIONSMESSEINRICHTUNG**

POSITION MEASURING DEVICE

DISPOSITIF DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.06.2014   DE 102014212268**

(43) Veröffentlichungstag der Anmeldung:
**06.01.2016   Patentblatt 2016/01**

(73) Patentinhaber: **Dr. Johannes Heidenhain GmbH 83301 Traunreut (DE)**

(72) Erfinder: **SÄNDIG, Karsten 83349 Palling (DE)**

(56) Entgegenhaltungen:
**EP-A1- 0 513 427      WO-A1-01/38828**
**DE-A1- 4 212 281      DE-A1-102008 044 858**

EP 2 963 391 B1

**Beschreibung**

## GEBIET DER TECHNIK

Die vorliegende Erfindung betrifft eine Positionsmesseinrichtung gemäß dem Oberbegriff von Anspruch 1.

## STAND DER TECHNIK

Aus der EP 513 427 A1 der Anmelderin oder der DE 42 12 281 (ebenfalls von der Anmelderin) sind Positionsmesseinrichtungen bekannt, die zur Erfassung der Position von zwei relativ zueinander in mindestens einer Messrichtung beweglichen Objekten geeignet ist. Hierzu umfasst die aus EP 0 513 427 A1 bekannte Positionsmesseinrichtung eine Maßverkörperung, die mit einem der beiden Objekte verbunden ist. Die Maßverkörperung weist eine sich in Messrichtung erstreckende Inkrementalteilung sowie mindestens eine Referenzmarkierung an einer Referenzposition auf. Die Referenzmarkierung besteht aus einer Struktur mit einer sich örtlich veränderlichen Teilungsperiode, d.h. sie weist eine sich in Messrichtung erstreckende Anordnung von Teilungsbereichen mit ortsabhängig variierenden Teilungsperioden auf. Derartige Strukturen bzw. Anordnungen werden auch als gechirpte Teilungsstrukturen oder gechirpte Gitter bezeichnet. Ferner weist die Positionsmesseinrichtung eine Abtasteinheit auf, die mit dem anderen der beiden Objekte verbunden ist. Die Abtasteinheit umfasst verschiedene Komponenten, die zur Erzeugung mindestens eines verschiebungsabhängigen Inkrementalsignals sowie mindestens eines Referenzsignals an einer definierten Referenzposition dienen. Die Signalerzeugung erfolgt dabei über die optische Abtastung der Inkrementalteilung und der Referenzmarkierung entlang der Messstrecke. Ein Referenzsignal resultiert hierbei an der Referenzposition, wenn sich alle Signalfrequenzanteile, die durch die unterschiedlichen gechirpten Teilungsperioden der Maßverkörperung und der Abtastgitter entstehen, phasenrichtig überlagern.

In Figur 8 der EP 513 427 A1 ist eine spezielle Variante einer derart ausgebildeten gechirpten Referenzmarkierung offenbart, die zwei zu einer Symmetrieachse spiegelsymmetrisch angeordnete Referenzmarkierungs-Teilfelder umfasst. Die beiden Referenzmarkierungs-Teilfelder bestehen jeweils aus einer sich in Messrichtung erstreckenden Anordnung von Teilungsbereichen mit ortsabhängig variierenden Teilungsperioden.

Die aus der EP 513 427 A1 bekannte Positionsmesseinrichtung basiert auf einem sog. interferentiellen Abtastprinzip, bei dem das erste Gitter im Abtaststrahlengang kollimiert beleuchtet wird. Aus der konstruktiven und destruktiven Überlagerung mehrerer Teilstrahlenbündel werden die verschiebungsabhängigen Abtastsignale gewonnen, die im Fall der Relativbewegung von Maßverkörperung und Abtasteinheit verschiebungsabhängige Phasenverschiebungen erfahren. Auf diese Art und Weise lassen sich hochaufgelöste Positionsinformationen bzgl. der Relativposition der beiden Objekte gewinnen. Als Maßverkörperung dient beim genutzten Abtastprinzip ein Phasengitter-Maßstab, der insbesondere für größere erforderliche Messlängen relativ aufwändig herzustellen ist. Soll daher in einer bestimmten Anwendung eine alternative bzw. mit weniger Aufwand herstellbare Maßverkörperung eingesetzt werden, z.B. ein Amplitudengitter-Maßstab, so kann die in Figur 8 der EP 513 427 A1 vorgeschlagene Variante zur Erzeugung eines Referenzsignals nicht genutzt werden. In der genannten Druckschrift finden sich keine Hinweise, welche Maßnahmen zur Erzeugung eines hochauflösenden Referenzsignals im Fall der Abtastung einer als Amplitudengitter ausgebildeten Maßverkörperung zu treffen sind.

## ZUSAMMENFASSUNG DER ERFINDUNG

Der vorliegenden Erfindung liegt die Aufgabe zugrunde, eine Positionsmesseinrichtung anzugeben, welche unter Verwendung einfach herstellbarer Maßverkörperungen die zuverlässige Erzeugung eines oder mehrerer Referenzsignale ermöglicht.

Diese Aufgabe wird erfindungsgemäß durch eine Positionsmesseinrichtung mit den Merkmalen des Anspruchs 1 gelöst.

Vorteilhafte Ausführungen der erfindungsgemäßen Positionsmesseinrichtung ergeben sich aus den Maßnahmen, die in den abhängigen Ansprüchen aufgeführt sind.

Die erfindungsgemäße Positionsmesseinrichtung dient zur Erfassung der Position von zwei relativ zueinander in mindestens einer Messrichtung beweglichen Objekten. Sie umfasst eine sich in Messrichtung erstreckende Maßverkörperung, die mit einem der beiden Objekte verbunden ist und mindestens eine Referenzmarkierung an einer Referenzposition aufweist, wobei die Referenzmarkierung aus einer sich in Messrichtung erstreckenden Anordnung von Teilungsbereichen mit ortsabhängig variierenden Teilungsperioden besteht. Ferner umfasst sie eine Abtasteinheit, die mit dem anderen der beiden Objekte verbunden ist und eine Lichtquelle, eine Abtastplatte und eine Referenzsignal-Detektoranordnung aufweist, um mindestens ein Referenzsignal an der Referenzposition zu erzeugen, wobei die Abtastplatte eine Referenzmarkierungs-Abtaststruktur besitzt, die aus einer sich in Messrichtung erstreckenden Anordnung von Teilungsbereichen mit ortsabhängig variierenden Teilungsperioden besteht. Die Anordnung der Teilungsbereiche in der Referenzmarkierung auf der Maßverkörperung und in der Referenzmarkierungs-Abtaststruktur der Abtastplatte ist dergestalt gewählt, dass die Gitter-Ortsfrequenzverteilungen in der Referenzmarkierungs-Abtaststruktur auf der Abtastplatte und in der Referenzmarkierung auf der Maßverkörperung unterschiedlich sind. Des Weiteren ist vorgesehen, dass die Referenzmarkierungs-Abtaststruktur eine erste Gitter-Ortsfrequenzverteilung aufweist und derart ausgebildet ist, dass aus der Wechselwirkung der von der Lichtquelle emittierten Strahlenbündel mit der Referenzmarkierungs-Abtaststruktur vorwiegend +/- 1. Beugungsordnungen resultieren, die überlagert auf der Maßverkörperung ein Selbstabbild der Referenzmarkierungs-Abtaststruktur mit einer zweiten Gitter-Ortsfrequenzverteilung erzeugen.

Dabei kann die Referenzmarkierungs-Abtaststruktur als kombinierte Amplituden- und Phasenstruktur ausgebildet sein, die durchlässige, undurchlässige sowie definiert phasenschiebende Teilungsbereiche aufweist.

Alternativ hierzu kann die Referenzmarkierungs-Abtaststruktur als Phasenstruktur ausgebildet sein, die transversal strukturierte Teilungsbereiche aufweist. Außerdem weist die auf der Maßverkörperung angeordnete Referenzmarkierung eine dritte Gitter-Ortsfrequenzverteilung auf. Zudem ist die Referenzmarkierungs-Abtaststruktur und/oder die auf der Maßverkörperung angeordnete Referenzmarkierung derart ausgebildet, dass die zweite und dritte Gitter-Ortsfrequenzverteilung im Frequenzraum um eine bestimmte Differenzfrequenz gegeneinander verschoben sind, so dass aus der optischen Wechselwirkung des Selbstabbilds der Referenzmarkierungs-Abtaststruktur mit der Referenzmarkierung in der Detektionsebene der Referenzsignal-Detektoranordnung ein Streifenmuster mit einer periodischen Ortsfrequenzkomponente resultiert, wenn sich die Maßverkörperung an der Referenzposition befindet, wobei die periodische Ortsfrequenzkomponente der Differenzfrequenz entspricht.

Vorzugsweise ist die Referenzmarkierungs-Abtaststruktur derart ausgebildet, dass auf der Maßverkörperung ein ortsfrequenzverdoppeltes Selbstabbild der Referenzmarkierungs-Abtaststruktur resultiert.

In einer möglichen Ausführungsform ist vorgesehen, dass

- die Referenzmarkierung zwei zu einer Referenzmarkierungs-Symmetrieachse spiegelsymmetrisch ausgebildete Referenzmarkierungs-Teilfelder umfasst und
- die Referenzmarkierungs-Abtaststruktur zwei zu einer Abtaststruktur-Symmetrieachse spiegelsymmetrisch ausgebildete Abtaststruktur-Teilfelder umfasst.

Desweiteren kann die Referenzsignal-Detektoranordnung eine Vielzahl von rechteckförmigen Detektorelementen umfassen, die in Messrichtung periodisch angeordnet sind, wobei die Detektor-Ortsfrequenz der Referenzsignal-Detektoranordnung der Differenzfrequenz zwischen der zweiten und dritten Gitter-Ortsfrequenzverteilung entspricht.

Alternativ kann die Referenzsignal-Detektoranordnung auch eine Vielzahl von rechteckförmigen Detektorelementen umfassen, die in Messrichtung aperiodisch angeordnet sind, wobei die lokale Detektor-Ortsfrequenz der Referenzsignal-Detektoranordnung der lokalen Differenzfrequenz zwischen der zweiten und dritten Gitter-Ortsfrequenzverteilung entspricht.

Vorzugsweise ist vorgesehen, dass jedes zweite Detektorelement der Referenzsignal- Detektoranordnung miteinander elektrisch verschaltet ist, wodurch eine erste Gruppe und eine zweite Gruppe von jeweils miteinander verschalteten Detektorelementen resultiert und über die erste Gruppe ein Referenz-Taktsignal und über die zweite Gruppe ein Referenz-Gegentaktsignal erzeugbar ist.

Dabei kann die Referenzsignal-Detektoranordnung derart ausgebildet sein, dass an der Referenzposition die Detektorelemente der ersten Gruppe ein Signalmaximum eines in der Detektionsebene der Referenzsignal-Detektoranordnung resultierenden Streifenmusters erfassen und die Detektorelemente der zweiten Gruppe ein Signalminimum des in der Detektionsebene der Referenzsignal- Detektoranordnung resultierenden Streifenmusters erfassen.

Es ist möglich, dass das Referenz-Taktsignal und das Referenz-Gegentaktsignal miteinander in Differenz verschaltet sind und an der Referenzposition aus dem verschalteten Referenz-Taktsignal und dem Referenz-Gegentaktsignal das Referenzsignal resultiert.

Mit Vorteil ist die Maßverkörperung als Auflicht-Amplitudengitter ausgebildet ist und die Referenzmarkierung umfasst alternierend angeordnete Teilungsbereiche unterschiedlicher Reflektivität.

Schließlich kann vorgesehen werden, dass auf der Maßverkörperung desweiteren eine sich in Messrichtung erstreckende Inkrementalteilung angeordnet ist und die Abtasteinheit Abtastmittel umfasst, um aus der Abtastung der Inkrementalteilung ein oder mehrere positionsabhängige Inkrementalsignale zu erzeugen.

Aufgrund der erfindungsgemäßen Ausbildung der Positionsmesseinrichtung können nunmehr auch Maßverkörperungen zur Erzeugung eines Referenzsignals abgetastet werden, die kein aufwändiges Herstellverfahren erfordern. Insbesondere ist hierbei der Einsatz von Amplitudengittern als Maßverkörperung möglich, die sowohl im Auflicht als auch im Durchlicht zur Erzeugung von Positionssignalen abtastbar sind.

Als weiterer Vorteil der erfindungsgemäßen Lösung resultiert eine große Unempfindlichkeit der Signalerzeugung gegenüber Schwankungen des Abtastabstands, also des Abstands zwischen Maßverkörperung und Abtasteinheit. Es ergeben sich damit relativ große Montagetoleranzen für die erfindungsgemäße Positionsmesseinrichtung, was deren Anbau in der jeweiligen Anwendung deutlich erleichtert. Ferner kann damit die erfindungsgemäße Positionsmesseinrichtung auch in Anwendungen eingesetzt werden, die ansonsten im Fall geringerer Montagetoleranzen nicht zugänglich wären.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

## KURZE BESCHREIBUNG DER ZEICHNUNGEN

Es zeigt

Figur 1 eine schematisierte Darstellung der Abtaststrahlengänge in einem ersten Ausführungsbeispiel der erfindungsgemäßen Positionsmesseinrichtung;

Figur 2 eine Draufsicht auf einen Teilbereich der Maßverkörperung der Positionsmesseinrichtung aus Figur 1, in dem neben einer Inkrementalteilung eine Referenzmarkierung angeordnet ist;

Figur 3a eine Draufsicht auf die Abtastplatte der Positionsmesseinrichtung aus Figur 1;

Figur 3b eine Schnittansicht der Abtastplatte aus Figur 3a im Bereich der Referenzmarkierungs-Abtaststruktur;

Figur 4 eine Draufsicht auf einen Teilbereich der Detektoranordnung der Positionsmesseinrichtung aus Figur 1 sowie verschiedene nachgeordnete Komponenten zur Erzeugung des Referenzsignals;

Figur 5 eine Darstellung des resultierenden Streifenmusters in der Detektionsebene der Positionsmesseinrichtung aus Figur 1 im Fall eines resultierenden maximalen Referenzsignals sowie einen Teil der Detektorelemente der Detektoranordnung;

Figur 6 eine Darstellung des Verlaufs des Referenz-Taktsignals und des Referenz-Gegentaktsignals in Abhängigkeit von der Position der Maßverkörperung in der Positionsmesseinrichtung aus Figur 1;

Figur 7 eine Darstellung des aus der Differenz-Verschaltung des Referenz-Taktsignals und des Referenz-Gegentaktsignals resultierenden Referenzsignals der Positionsmesseinrichtung aus Figur 1;

Figur 8 eine Draufsicht auf einen Teilbereich der Detektoranordnung eines zweiten Ausführungsbeispiels der erfindungsgemäßen Positionsmesseinrichtung sowie verschiedene nachgeordnete Komponenten zur Erzeugung des Referenzsignals;

Figur 9 eine Darstellung des resultierenden Streifenmusters in der Detektionsebene des zweiten Ausführungsbeispiels der erfindungsgemäßen Positionsmesseinrichtung im Fall eines resultierenden maximalen Referenzsignals.

## BESCHREIBUNG DER AUSFÜHRUNGSFORMEN

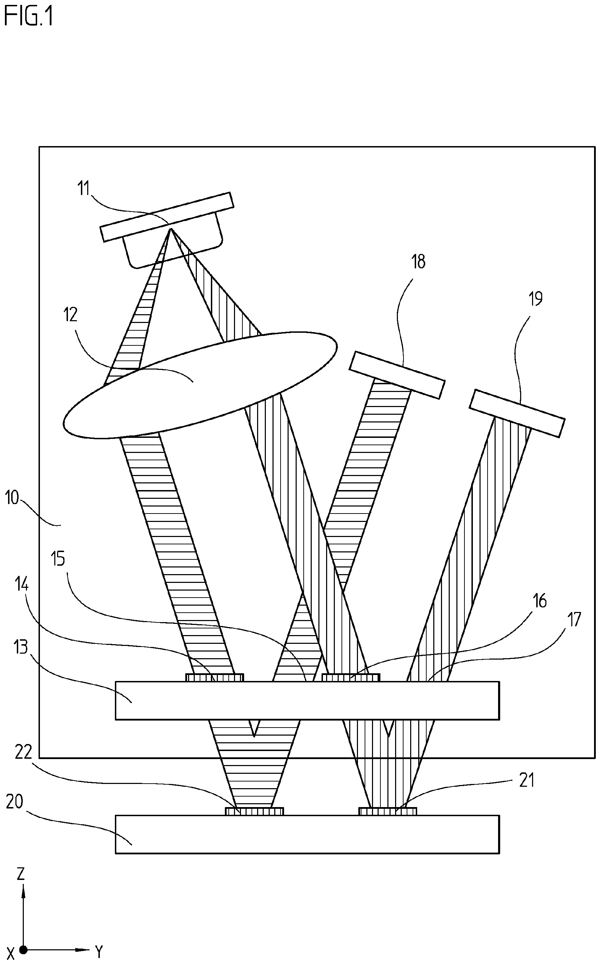

Ein erstes Ausführungsbeispiel der erfindungsgemäßen Positionsmesseinrichtung wird nachfolgend anhand der Figuren 1 - 7 erläutert.

Wie aus der schematisierten Darstellung der Abtaststrahlengänge in Figur 1 ersichtlich, umfasst die in der vorliegenden Variante als Auflichtsystem ausgebildete erfindungsgemäße Positionsmesseinrichtung eine Abtasteinheit 10 sowie eine Maßverkörperung 20, letztere ist hier als reflektive Maßverkörperung ausgebildet. Die Abtasteinheit 10 und die Maßverkörperung 20 sind mit nicht dargestellten Objekten verbunden, die mindestens entlang der in den Figuren mit x bezeichneten Messrichtung beweglich zueinander angeordnet sind. Bei den Objekten kann es sich beispielsweise um relativ zueinander bewegliche Maschinenkomponenten handeln, deren Position zueinander erfasst werden muss. Die von der Positionsmesseinrichtung erzeugten Positionssignale werden in diesem Fall einer - nicht in den Figuren gezeigten - übergeordneten Maschinensteuerung zugeführt, welche diese in bekannter Art und Weise weiterverarbeitet und z.B. zur Positionierung der beweglichen Maschinenkomponenten nutzt.

Über die in Figur 1 gezeigte Positionsmesseinrichtung können aus der optischen Abtastung einer auf der Maßverkörperung 20 angeordneten und sich in Messrichtung x erstreckenden Inkrementalteilung 21 im Fall der Relativbewegung von Abtasteinheit 10 und Maßverkörperung 20 mehrere phasenverschobene periodische Inkrementalsignale erzeugt werden. Die Messrichtung x ist in Figur 1 senkrecht zur Zeichenebene orientiert. Die derart generierten Inkrementalsignale dienen in bekannter Art und Weise zur Erfassung der Relativbewegung von Maßverkörperung 20 und Abtasteinheit 10. An mindestens einer bekannten Referenzposition $X_{REF}$ ist entlang der Messrichtung x auf der Maßverkörperung 20 eine Referenzmarkierung 22 angeordnet, um an dieser Position ein Referenzsignal REF zu erzeugen; selbstverständlich können auch mehrere Referenzmarkierungen vorgesehen sein, z.B. sogenannte abstandscodierte Referenzmarkierungen. Über das Referenzsignal REF kann hierbei ein definierter Absolutbezug für die Inkrementalsignale hergestellt werden. Nach dem Überfahren der Referenzmarkierung 22 und dem nachfolgend erläuterten Erzeugen eines Referenzsignals REF ist es möglich, die hochauflösenden Inkrementalsignale auf die bekannte Referenzposition $X_{REF}$ zu beziehen. Sobald demnach die Referenzierung erfolgt ist, kann mit Hilfe der erfindungsgemäßen Positionsmesseinrichtung eine hochauflösende absolute Positionsbestimmung bzgl. der beiden Objekte vorgenommen werden.

Zur optischen Abtastung der Inkrementalteilung 21 und der Referenzmarkierung 22 auf der Maßverkörperung 20 umfasst die Abtasteinheit 10 eine Lichtquelle 11, eine Kollimatoroptik 12, eine Abtastplatte 13, eine Inkrementalsignal-Detektoranordnung 19 zur Erfassung der Inkrementalsignale sowie eine Referenzsignal-Detektoranordnung 18 zur Erfassung des Referenzsignals REF. Auf der Abtastplatte 13 sind ferner eine Referenzmarkierungs-Abtaststruktur 14, eine Inkrementalteilungs-Abtaststruktur 16 sowie optisch unwirksame Fensterbereiche 15, 17 angeordnet. Hinsichtlich der genauen Ausbildung der verschiedenen Komponenten zur Signalerzeugung sei auf die nachfolgende Beschreibung des Abtaststrahlengangs zur erfindungsgemäßen Erzeugung des Referenzsignals REF verwiesen.

Ein von der Lichtquelle 11, ausgebildet als Laserdiode oder LED, emittiertes Strahlenbündel (in Figur 1 links verlaufend) erfährt in der Abtasteinheit 10 über die Kollimationsoptik 12 zunächst eine Kollimation und wird dabei in ein paralleles Strahlenbündel umgewandelt. Unter einem moderat schrägen Winkel gegenüber der Normalen auf die Abtastplatte 13 fällt das Strahlenbündel dann auf die Referenzmarkierungs-Abtaststruktur 14 auf der Oberseite der Abtastplatte 13. In einem möglichen Ausführungsbeispiel beträgt dieser Winkel etwa 8°, selbstverständlich sind auch alternative schräge Winkel im Rahmen der vorliegenden Erfindung möglich. Nach dem Durchlaufen der Referenzmarkierungs-Abtaststruktur 14 gelangt das Strahlenbündel anschließend auf die Maßverkörperung 20, erfährt hier an der Referenzposition $X_{REF}$ eine Wechselwirkung mit der Referenzmarkierung 22 und wird wieder in Richtung der Abtasteinheit 10 zurückreflektiert. Dort durchläuft es in der Abtastplatte 13 einen optisch unwirksamen Fensterbereich 15 und trifft dann auf die Referenzsignal-Detektoranordnung 18.

Ähnlich hierzu verläuft auch der Abtaststrahlengang zur Erzeugung der positionsabhängigen Inkrementalsignale mittels geeigneter Abtastmittel. In Figur 1 stellt das rechts verlaufende Strahlenbündel den zugehörigen Abtaststrahlengang dar. Ausgehend von der Lichtquelle 11, über die Kollimationsoptik 12, die Inkrementalteilungs-Abtaststruktur 16, die Inkrementalteilung 21 auf der Maßverkörperung 20 und einen weiteren transparenten Fensterbereich 17 in der Abtastplatte 13 gelangt dieses Strahlenbündel auf die Inkrementalsignal-Detektoranordnung 19. Im Hinblick auf die Erzeugung der Inkrementalsignale, die für die vorliegende Erfindung nicht wesentlich ist, sei im übrigen auf die EP 1 081 457 A2 der Anmelderin verwiesen.

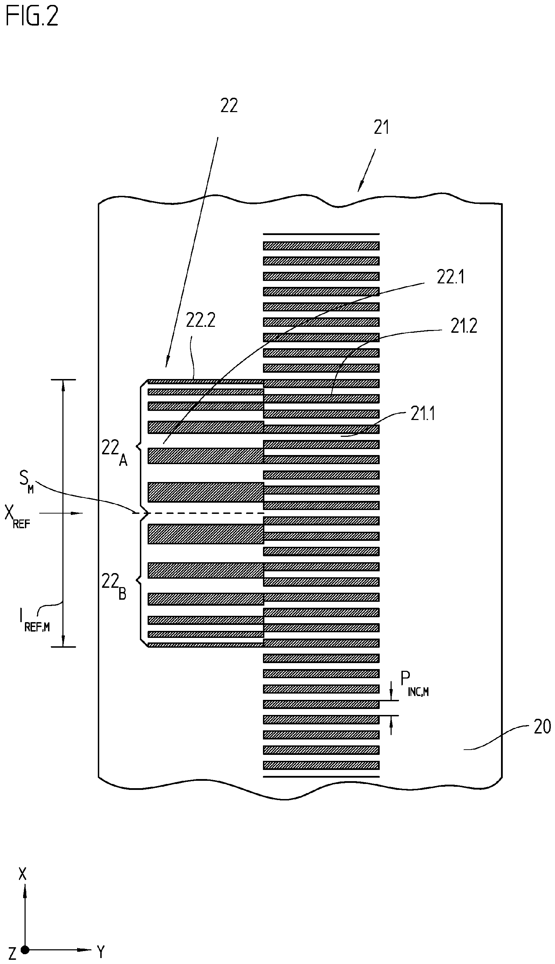

Eine Draufsicht auf einen Bereich der Maßverkörperung 20, die als Auflicht-Amplitudengitter ausgebildet ist und in dem neben der Inkrementalteilung 21 eine Referenzmarkierung 22 angeordnet ist, ist in Figur 2 gezeigt. Wie daraus ersichtlich, besteht die Inkrementalteilung 21 aus einer in Messrichtung x periodischen Anordnung von Teilungsbereichen 21.1, 21.2 mit unterschiedlichen Reflexionseigenschaften. Die verschiedenen Teilungsbereiche 21.1, 21.2 besitzen jeweils eine rechteckige Form, wobei sich die Rechtecklängsachsen in der Anordnungsebene entlang der angegebenen y-Richtung, also senkrecht zur Messrichtung x erstrecken. Während dabei die in der Figur hell dargestellten Teilungsbereiche 21.1 eine hohe Reflektivität besitzen, weisen die dunkel dargestellten Teilungsbereiche 21.2 der Inkrementalteilung 21 im vorliegenden Ausführungsbeispiel nur eine geringe Reflektivität auf. Die Periodizität der Inkrementalteilung 21 wird in Figur 2 mit $P_{INC,M}$ bezeichnet, d.h. die Breite eines rechteckförmigen Teilungsbereichs 21.1 bzw. 21.2 beträgt jeweils $P_{INC,M}/2$.

An mindestens einer lagemäßig bekannten Referenzposition $X_{REF}$ ist gemäß Figur 2 entlang der Messrichtung x eine Referenzmarkierung 22 auf der Maßverkörperung 20 angeordnet, die ebenfalls aus einer sich in Messrichtung x erstreckenden Anordnung von Teilungsbereichen 22.1, 22.2 besteht. Die Referenzmarkierung 22 besitzt entlang der Messrichtung x die Länge $I_{REF,M}$. Die alternierend angeordneten Teilungsbereiche 22.1, 22.2 sind vorliegend wie in der Inkrementalteilung 21 ebenfalls hoch und gering reflektierend ausgebildet.

Im Unterschied zur periodisch ausgebildeten Inkrementalteilung 21 weist die Anordnung der Teilungsbereiche 22.1, 22.2 der Referenzmarkierung 22 auf der Maßverkörperung 20 ortsabhängig variierende Teilungsperioden auf, nachfolgend sei diesbezüglich auch die Rede von sog. gechirpten Strukturen. Alternativ zur Betrachtung der die Referenzmarkierung 22 charakterisierenden ortabhängig variierenden Teilungsperioden kann auch von einer Gitter-Ortsfrequenzverteilung der Referenzmarkierung 22 gesprochen werden. Im Zusammenhang mit der Referenzmarkierung 22 auf der Maßverkörperung 20 sei in der nachfolgenden Beschreibung von einer dritten Gitter-Ortsfrequenzverteilung die Rede.

Im konkreten Ausführungsbeispiel der Figur 2 umfasst die Referenzmarkierung 22 zwei zu einer Referenzmarkierungs-Symmetrieachse $S_M$ spiegelsymmetrisch angeordnete bzw. ausgebildete, gechirpte Referenzmarkierungs-Teilfelder $22_A$, $22_B$, die entlang der Messrichtung x jeweils die Länge $I_{REF,M}/2$ aufweisen. Gemäß Figur 2 ist die Referenzmarkierungs-Symmetrieachse $S_M$ dabei parallel zur Richtung y, also senkrecht zur Messrichtung x orientiert. In den Referenzmarkierungs-Teilfeldern $22_A$, $22_B$ werden hier ausgehend von der Referenzmarkierungs-Symmetrieachse $S_M$ die Teilungsperioden der Teilungsbereiche 22.1, 22.2 nach außen hin immer kleiner bzw. die entsprechenden Gitter-Ortsfrequenzen immer größer.

Grundsätzlich wäre auch ein umgekehrter Verlauf der Gitter-Ortsfrequenzen in der Referenzmarkierung im Rahmen der vorliegenden Erfindung möglich. In diesem Fall würden also die Gitter-Ortsfrequenzen nach außen hin immer kleiner bzw. die Teilungsperioden immer größer.

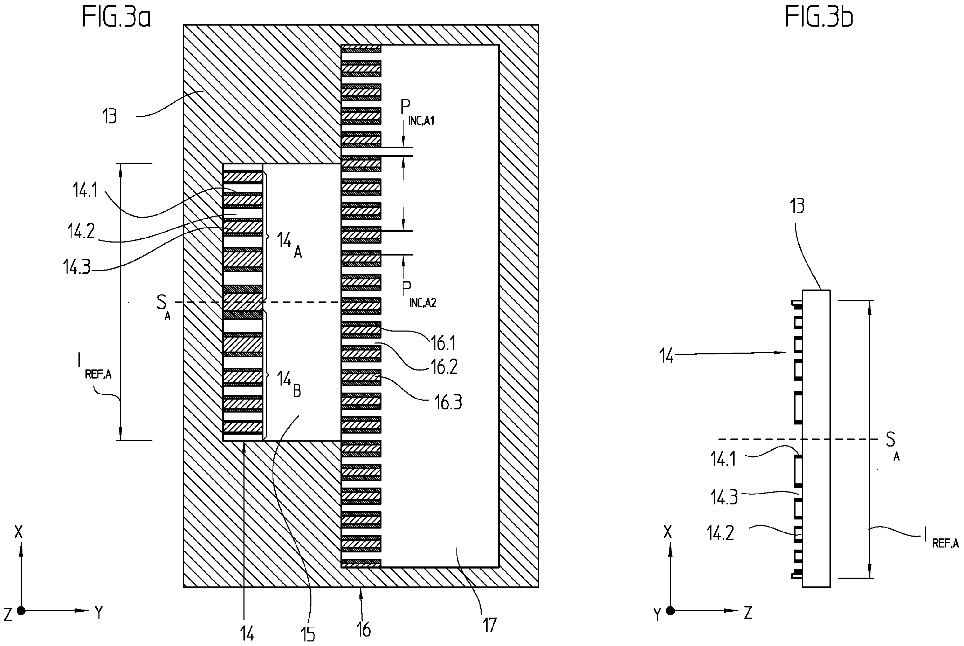

Eine Draufsicht auf die Abtastplatte 13 des vorliegenden Ausführungsbeispiels der erfindungsgemäßen Positionsmesseinrichtung 13 zeigt Figur 3a; eine Schnittansicht durch die Referenzmarkierungs-Abtaststruktur 14 ist in Figur 3b dargestellt. Als Abtastplatte 13 fungiert hier eine Glasplatte, in der die verschiedenen Teilungsbereiche 14.1 - 14.3, 16.1 - 16.3 der unterschiedlichen Abtaststrukturen 14, 16 als absorbierende Chrom-Stege, durchlässige Glasbereiche und tiefgeätzte, phasenschiebende Glasbereiche der jeweils vorgesehenen kombinierten Amplituden- und Phasenstrukturen ausgebildet sind.

Im rechten Teil der in Figur 3a gezeigten Ansicht der Abtastplatte 13 ist neben der Inkrementalteilungs-Abtaststruktur 16 der transparente Fensterbereich 17 erkennbar, den die von der Maßverkörperung 20 zurückreflektierten Strahlenbündel zur Inkrementalsignalerzeugung vor dem Auftreffen auf der Inkrementalsignal-Detektoranordnung 19 durchlaufen. Die sich entlang der Messrichtung x ersteckende Inkrementalteilungs-Abtaststruktur 16 ist als periodische kombinierte Amplituden- und Phasenstruktur ausgebildet, wie sie etwa aus der oben erwähnten EP 1 082 457 A2 bekannt ist. Die Amplitudenstruktur der Inkrementalteilungs-Abtaststruktur 16 wird hierbei aus den periodisch angeordneten, dunkel und hell dargestellten, rechteckförmigen Teilungsbereichen 16.1, 16.2 gebildet, die undurchlässig und durchlässig für das darauf einfallende Licht ausgebildet sind. Dabei besitzt die Amplitudenstruktur der Inkrementalteilungs-Abtaststruktur 16 die Periodizität $P_{INC,A1}$, die der Summe der Breite durchlässiger und undurchlässiger Teilbereiche 16.1, 16.2 entlang der Messrichtung x entspricht, wie dies in Figur 3a veranschaulicht ist. Die Phasenstruktur der Inkrementalteilungs-Abtaststruktur 16 wird durch periodisch entlang der Messrichtung x angeordnete, tiefgeätzte Teilungsbereiche 16.3 der Abtastplatte 13 gebildet, die ebenfalls rechteckförmig sind und in Figur 3a mit einer Schraffur versehen dargestellt werden. Die Teilungsbereiche 16.3 haben eine definierte phasenschiebende Wirkung auf die durchtretenden Strahlenbündel. Mit $P_{INC,A2}$ wird in Figur 3a die Periodizität der Phasenstruktur bzw. der phasenschiebenden Teilungsbereiche 16.3 in der Inkrementalteilungs-Abtaststruktur 16 bezeichnet.

In y-Richtung rechts benachbart zur Inkrementalteilungs-Abtaststruktur 16 ist gemäß Figur 3a der transparente Fensterbereich 17 in der Abtastplatte 13 erkennbar, den die von der Maßverkörperung 20 zurückreflektierten Strahlenbündel zur Referenzsignalerzeugung vor dem Auftreffen auf der Inkrementalsignal-Detektoranordnung 19 durchlaufen.

Unterschiedlich zur Inkrementalteilungs-Abtaststruktur 17 ist auf der Abtastplatte 13 die Referenzmarkierungs-Abtaststruktur 14 ausgebildet, nämlich als Anordnung von Teilungsbereichen 14.1, 14.2, 14.3 mit ortsabhängig variierenden Teilungsperioden, d.h. als gechirptes Transmissionsgitter. Entlang der Messrichtung x besitzt die Referenzmarkierungs-Abtaststruktur 14 die begrenzte Länge $l_{REF,A}$; diese ist in einem möglichen Ausführungsbeispiel in etwa identisch zur Länge $l_{REF,M}$ der Referenzmarkierung 22 auf der Maßverkörperung 20. Auch die Referenzmarkierungs-Abtaststruktur 14 ist als kombinierte Amplituden- und Phasenstruktur ausgebildet und umfasst undurchlässige Teilungsbereiche 14.1, durchlässige Teilungsbereiche 14.2 sowie tiefgeätzte Teilungsbereiche 14.3, in denen die transmittierten Strahlenbündel eine definierte Phasenverschiebung erfahren.

Die Referenzmarkierungs-Abtaststruktur 14 ist wie aus Figur 3a ersichtlich als gechirpte Struktur ausgebildet, d.h. die Anordnung der Teilungsbereiche 14.1, 14.2, 14.3 in der Referenzmarkierungs-Abtaststruktur 13.2 ist derart gewählt, dass die Teilungsperioden ortsabhängig variieren. Hierbei umfasst die Referenzmarkierungs-Abtaststruktur 14 auf der Abtastplatte 13 im dargestellten Ausführungsbeispiel zwei zu einer Abtaststruktur-Symmetrieachse $S_A$ spiegelsymmetrisch angeordnete Abtaststruktur-Teilfelder $14_A$, $14_B$. Gemäß Figur 3a ist die Abtaststruktur-Symmetrieachse $S_M$ parallel zur Richtung y, also senkrecht zur Messrichtung x orientiert. In den Abtaststruktur-Teilfeldern $14_A$, $14_B$ werden ausgehend von der Abtaststruktur-Symmetrieachse $S_A$ die Teilungsperioden der Teilungsbereiche 14.1, 14.2, 14.3 nach außen hin immer kleiner.

Im Fall der oben erwähnten alternativen Ausbildung der Referenzmarke mit nach außen hin größer werdenden Teilungsperioden müsste natürlich auch die Referenzmarkierungs-Abtaststruktur entsprechend angepasst ausgebildet werden. Diese würde dann ebenfalls nach außen hin größer werdende Teilungsperioden besitzen.

Wie schon im Fall der Referenzmarkierung 22 auf der Maßverkörperung 20 kann auch die gechirpte Referenzmarkierungs-Abtaststruktur 14 über eine Gitter-Ortsfrequenzverteilung charakterisiert werden. Diese sei nachfolgend als erste Gitter-Ortsfrequenzverteilung bezeichnet und unterscheidet sich von der dritten Gitter-Ortsfrequenzverteilung der Referenzmarkierung 22 auf der Maßverkörperung 20. Im Frequenzraum werden demnach im vorliegenden Ausführungsbeispiel der Referenzmarkierungs-Abtaststruktur 14 analog zur Referenzmarkierung 22 die Gitter-Ortsfrequenzen ausgehend von der Abtaststruktur-Symmetrieachse $S_A$ nach außen hin immer größer; die Teilungsperioden hingegen werden in den Abtaststruktur-Teilfeldern $14_A$, $14_B$ wie aus Figur 3a ersichtlich nach außen hin immer kleiner.

Über die Ausbildung der Referenzmarkierungs-Abtaststruktur 14 in Form der erläuterten kombinierten Amplituden- und Phasenstruktur ist in diesem Ausführungsbeispiel gewährleistet, dass im Strahlengang zur Abtastung der Referenzmarkierung 22 aus der Wechselwirkung der von der Lichtquelle emittierten Strahlenbündel mit der Referenzmarkierungs-Abtaststruktur 14 vorwiegend +/- 1. Beugungsordnungen in Transmission hinter der Abtastplatte 13 resultieren und zur Erzeugung des Referenzsignals REF beitragen. Die Entstehung anderer Beugungsordnungen an der Referenzmarkierungs-Abtaststruktur 14 wird durch die gewählte Ausgestaltung der Referenzmarkierungs-Abtaststruktur 14 dagegen weitgehend unterdrückt.

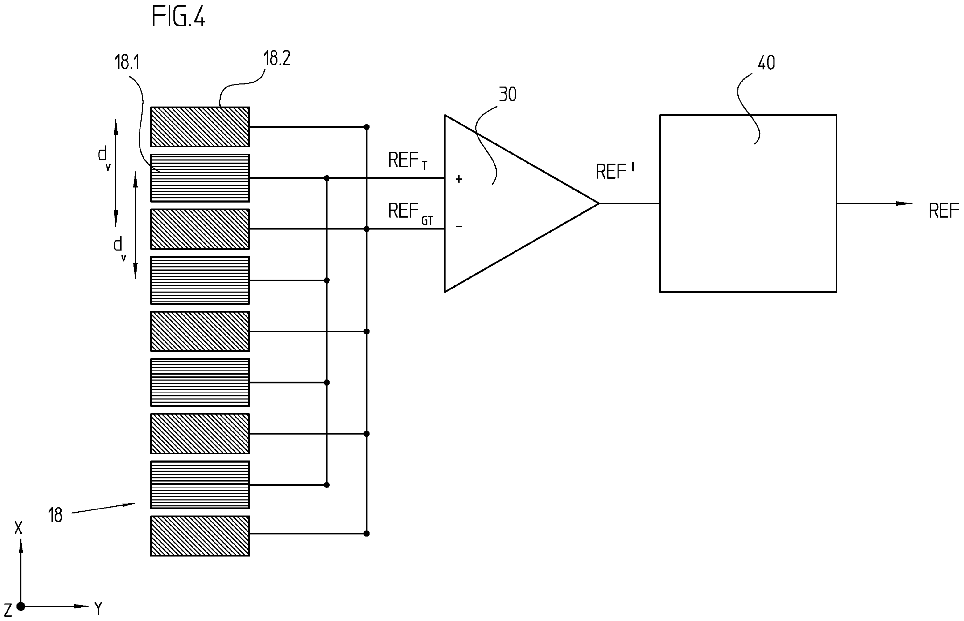

Eine schematisierte Darstellung der Referenzsignal-Detektoranordnung 18 der erfindungsgemäßen Positionsmesseinrichtung inklusive nachgeordneter Signalverarbeitungskomponenten ist in Figur 4 gezeigt. Wie daraus ersichtlich, besteht die Referenzsignal-Detektoranordnung 18 aus einer Vielzahl von rechteckförmig ausgebildeten Detektorelementen 18.1, 18.2, die entlang der Messrichtung x periodisch angeordnet sind. Die entsprechende Detektor-Periodizität wird nachfolgend auch mit der Größe $d_v$ bezeichnet; auf die Bedeutung dieser Größe wird im weiteren Verlauf der Beschreibung noch näher eingegangen. Betrachtet man die Referenzsignal-Detektoranordnung 18 bzw. die periodische Anordnung der Detektorelemente 18.1, 18.2 im Frequenzraum, so besitzt die Referenzsignal-Detektoranordnung 18 die Detektor-Ortsfrequenz $f_v = 1/d_v$.

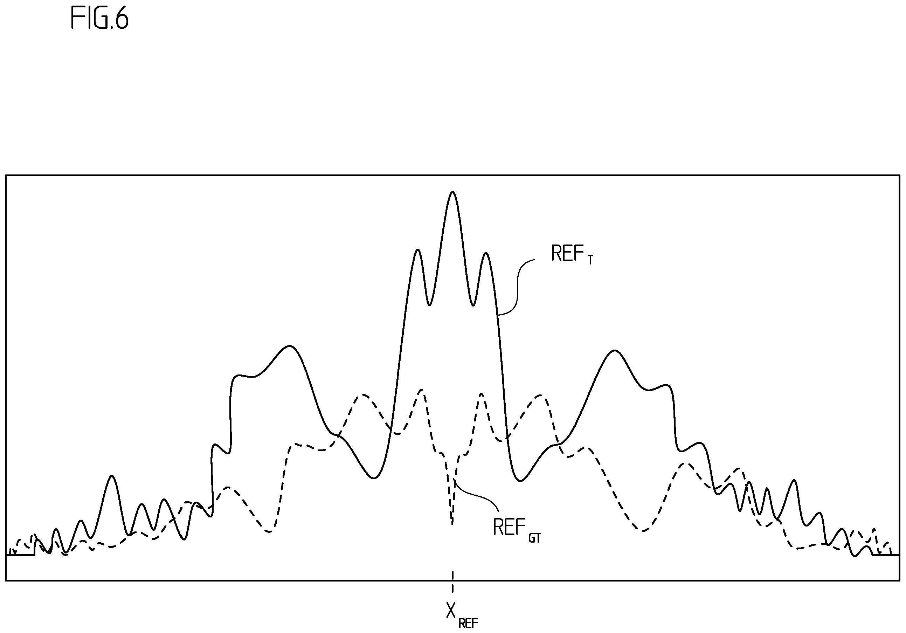

Wie in Figur 4 dargestellt, ist jedes zweite Detektorelement 18.1, 18.2 der Referenzsignal-Detektoranordnung 18 miteinander elektrisch verschaltet, so dass eine erste Gruppe mit verschalteten Detektorelementen 18.1 und eine zweite Gruppe von verschalteten Detektorelementen 18.2 vorliegt. Ausgangsseitig resultiert seitens der ersten Gruppe verschalteter Detektorelemente 18.1 aus der Abtastung der Referenzmarkierung 22 auf der Maßverkörperung 20 ein erstes Teilsignal, das nachfolgend als Referenz-Taktsignal $REF_T$ bezeichnet wird; seitens der zweiten Gruppe verschalteter Detektorelemente 18.2 resultiert ein zweites Teilsignal, das im folgenden als Referenz-Gegentaktsignal $REF_{GT}$ bezeichnet wird. Der Verlauf der Signale $REF_T$, $REF_{GT}$ im Bereich der Referenzposition $X_{REF}$ ist in Figur 6 gezeigt.

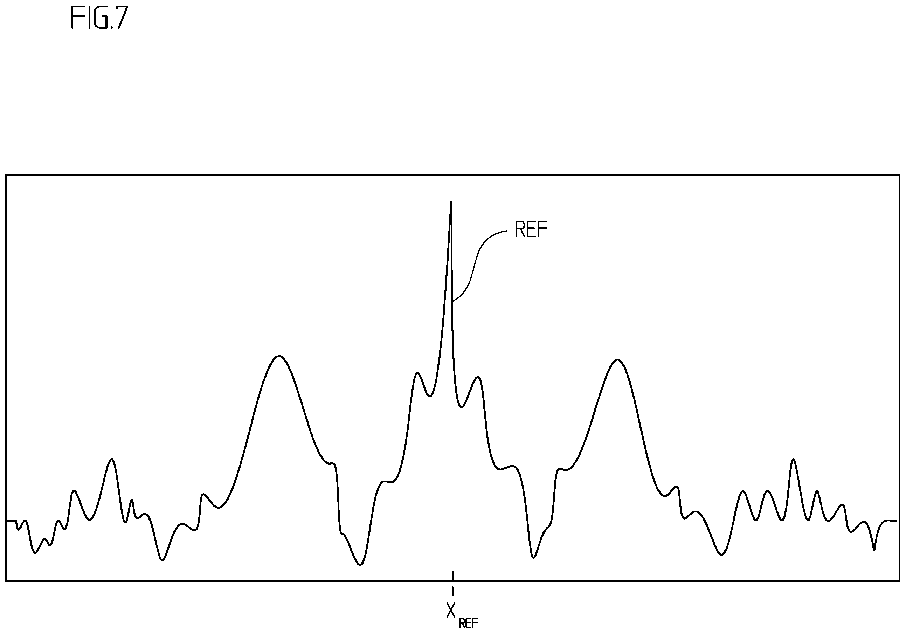

Das Referenz-Taktsignal $REF_T$ und das Referenz-Gegentaktsignal $REF_{GT}$ werden wie aus Figur 4 ersichtlich einem Differenzbildungselement 30 zugeführt, an dessen Ausgang dann das Signal REF' resultiert. Dieses Signal REF' wird über die Korrektureinheit 40 abschließend noch einer Signalkorrektur, insbesondere einer Offsetkorrektur unterzogen. Am Ausgang der Korrektureinheit steht dann das Referenzsignal REF zur Weiterverarbeitung z.B. durch eine - nicht gezeigte - Steuereinheit bereit, dessen Verlauf im Bereich der Referenzposition $X_{REF}$ in Figur 7 gezeigt ist.

Im folgenden wird nunmehr die Erzeugung des Referenzsignals REF mit Hilfe der vorhergehend beschriebenen erfindungsgemäßen Positionsmesseinrichtung im Detail erläutert.

Aufgrund der oben beschriebenen Ausbildung der Referenzmarkierungs-Abtaststruktur 14 resultiert nach diesem Element im Strahlengang eine Überlagerung von gebeugten Teilstrahlenbündeln +/- 1. Ordnung. Über einen relativ großen Abstandsbereich zwischen Maßverkörperung 20 und Abtasteinheit 10 wird dadurch ein Selbstabbild der auf der Abtastplatte 13 angeordneten Referenzmarkierungs-Abtaststruktur 14 erzeugt. Das in der Maßverkörperungsebene resultierende Selbstabbild der Referenzmarkierungs-Abtaststruktur 14 stellt somit ebenfalls wieder eine gechirpte Struktur dar, wobei das Selbstabbild aufgrund der vorgesehenen Ausbildung der Referenzmarkierungs-Abtaststruktur 14 jedoch eine zweite Gitter-Ortsfrequenzverteilung aufweist, die sich von der ersten Gitter-Ortsfrequenzverteilung der Referenzmarkierungs-Abtaststruktur 14 unterscheidet. In einem bevorzugten Ausführungsbeispiel liegt ein ortsfrequenzverdoppeltes Selbstabbild der Referenzmarkierungs-Abtaststruktur 14 in der Maßverkörperungsebene vor, d.h. die Teilungsbereiche des Selbstabbilds besitzen Teilungsperioden, die halb so groß sind wie die Teilungsperioden in den entsprechenden bzw. korrespondierenden Bereichen der Referenzmarkierungs-Abtaststruktur 14. Das derart erzeugte Selbstabbild besitzt ferner eine Längsausdehnung, die etwa der Länge $I_{REF, A}$ der Referenzmarkierungs-Abtaststruktur 14 entspricht.

Über eine geeignete Ausbildung der Referenzmarkierungs-Abtaststruktur 14 wird im vorliegenden Ausführungsbeispiel ferner sichergestellt, dass die zweite Gitter-Ortsfrequenzverteilung des Selbstabbilds in der Maßverkörperungsebene gegenüber der dritten Gitter-Ortsfrequenz der Referenzmarkierung 22 um eine bestimmte Differenzfrequenz $f_v$ verschoben ist. Alternativ hierzu wäre es grds. auch möglich, die erforderliche Differenzfrequenz $f_v$ durch die geeignete Ausbildung der Referenzmarkierung 22 auf der Maßverkörperung 20 einzustellen. Aus der optischen Wechselwirkung des erzeugten Selbstabbilds der Referenzmarkierungs-Abtaststruktur 14 mit der Referenzmarkierung 22 resultiert in der Detektionsebene der Referenzsignal-Detektoranordnung 18 ein Streifenmuster mit einer periodischen Ortsfrequenz-Komponente, wenn sich die Maßverkörperung 20 an der Referenzposition $X_{REF}$ befindet; die periodische Ortsfrequenz-Komponente entspricht hierbei der Differenzfrequenz $f_v$. Das erzeugte Streifenmuster wird dann mit Hilfe der Referenzsignal-Detektoranordnung 18 mit der gewählten Detektor-Ortsfrequenz $f_v$ bzw. der Detektor-Periodizität $d_v$ = $1/f_v$ erfasst. Die Detektor-Ortsfrequenz der Referenzsignal-Detektoranordnung 18 entspricht damit der Differenzfrequenz $f_v$ zwischen der zweiten und dritten Gitter-Ortsfrequenzverteilung.

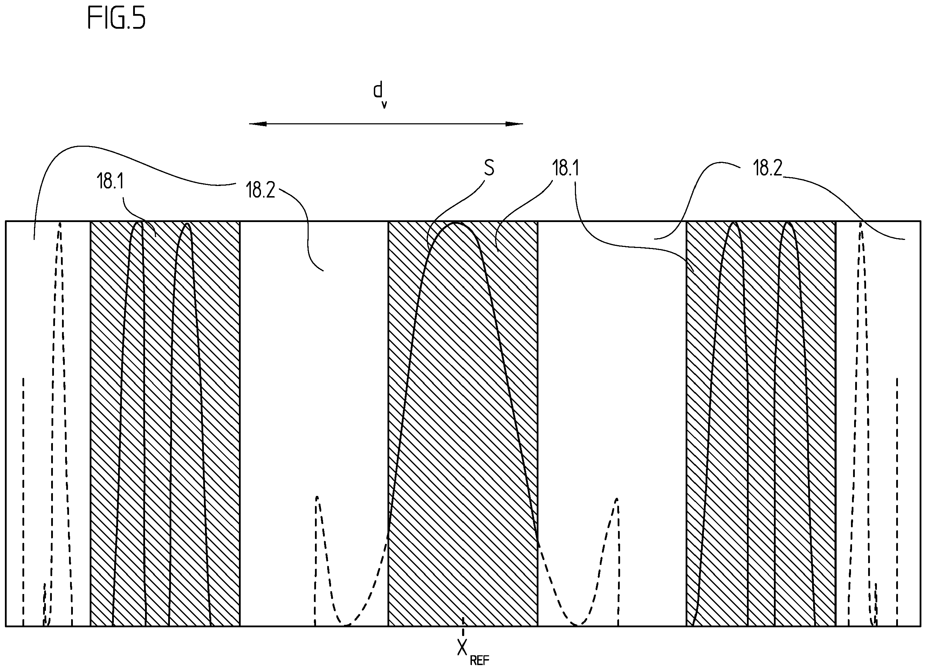

Befindet sich die Abtasteinheit 10 unmittelbar über der Referenzmarkierung 22, so erfassen die Detektorelemente 18.1 der ersten Gruppe von Detektorelementen der Referenzsignal-Detektoranordnung 18 jeweils Signalmaxima im erzeugten Streifenmuster in der Detektionsebene. Über die Detektorelemente 18.2 der zweiten Gruppe werden die Signalminima im Streifenmuster in der Detektionsebene erfasst. In Figur 5 ist genau dieser Fall schematisiert veranschaulicht; dargestellt ist hier das resultierende Streifenmuster S an der Referenzposition $X_{REF}$ sowie die den Signalmaxima und den Signalminima zugeordneten Detektorelemente 18.1, 18.2 der Referenzsignal-Detektoranordnung 18. Das an der Referenzposition $X_{REF}$ aus den verschalteten Detektorelementen 18.1 der ersten Gruppe resultierende Referenz-Taktsignal $REF_T$ sowie das aus den verschalteten Detektorelementen 18.2 der zweiten Gruppe resultierende Referenz-Gegentaktsignal $REF_{GT}$ ist in Figur 6 gezeigt; in Figur 7 ist das aus der Differenzverschaltung des Referenz-Taktsignals $REF_T$ mit dem Referenz-Gegentaktsignal $REF_{GT}$ resultierende und offsetkorrigierte Referenzsignal REF veranschaulicht.

Abschließend sei für das erste Ausführungsbeispiel der erfindungsgemäßen Positionsmesseinrichtung erläutert, wie die zur Erzeugung des Referenzsignals beitragenden Komponenten im Abtaststrahlengang mathematisch charakterisierbar sind, um derart die nötigen Strukturen gezielt zu dimensionieren.

So kann die ortsabhängige Phasenfunktion $p_M(x)$ der Referenzmarkierung 22 auf der Maßverkörperung 20 z.B. durch das nachfolgende Polynom beschrieben werden:

$$p_M(x) = ax + bx^3 \qquad \text{(Gl. 1)}$$

mit:

$p_M(x)$ := ortsabhängige Phasenfunktion der Referenzmarkierung auf der Maßverkörperung
a,b := Polynomkoeffizienten
x := Ortskoordinate entlang der Messrichtung

Aus der Phasenfunktion $p_M(x)$ der Referenzmarkierung 22 auf der Maßverkörperung 20 können die Teilungsbereiche der Referenzmarkierung 22 auf der Maßverkörperung 20 mit hoher bzw. niedriger Reflexion wie folgt direkt bestimmt werden:

$$R(x) = \begin{cases} 1 : wenn\ abs(p_M(x)) - round\ (p_M(x)) < \frac{1}{4} \\ 0 : sonst \end{cases} \qquad \text{(Gl. 2)}$$

mit:

R(x) := ortsabhängige Reflektivität der Referenzmarkierung auf Maßverkörperung
$p_M(x)$ := ortsabhängige Phasenfunktion der Referenzmarkierung auf der Maßverkörperung
x := Ortskoordinate entlang der Messrichtung

Grundsätzlich können hierbei hoch-reflektierende und gering-reflektierende Teilungsbereiche auf der Maßverkörperung 20 auch entsprechend vertauscht werden.

Das frequenzverdoppelte Selbstabbild der Referenzmarkierungs-Abtaststruktur 14 muss wie bereits oben erläutert um die Detektor-Ortsfrequenz $f_v = 1/d_v$ der periodischen Referenzsignal-Detektoranordnung 18 verschoben sein.

Für die Intensitätsverteilung I(x) in der Maßverkörperungsebene gilt hierbei:

$$I(x) = 1 + \cos(4\pi p_{AP}(x)) \qquad \text{(Gl. 3)}$$

mit:

I(x) := ortsabhängige Intensitätsverteilung in der Maßverkörperungsebene
$p_{AP}(X)$ := ortsabhängige Phasenfunktion der Referenzmarkierungs-Abtaststruktur auf der Abtastplatte
x := Ortskoordinate entlang der Messrichtung

Dabei gilt für die ortabhängige Phasenfunktion der Referenzmarkierungs-Abtaststruktur 14 auf der Abtastplatte 13:

$$p_{AP}(x) = \frac{1}{2}\left[\left(a \pm \frac{1}{d_V}\right) x + bx^3\right] \qquad \text{(Gl. 4)}$$

mit:

$p_{AP}(X)$      := ortsabhängige Phasenfunktion der Referenzmarkierungs-Abtaststruktur auf der Abtastplatte
$d_v$      := Detektor-Periodizität der Referenzsignal-Detektoranordnung
a, b      := Polynomkoeffizienten
x      := Ortskoordinate entlang der Messrichtung

Die komplexe Transmission T(x) der Referenzmarkierungs-Abtaststruktur 14 kann gemäß nachfolgender Gleichung wieder aus der Phasenfunktion der Referenzmarkierungs-Abtaststruktur 14 der Abtastplatte 13 bestimmt werden.

$$T(x) = \begin{cases} -1 : wenn\ abs\big(p_{AP}(x) - round\big(p_{AP}(x)\big)\big) < \frac{1}{6} \\ 0 : wenn\ abs\big(p_{AP}(x) - round\big(p_{AP}(x)\big)\big) < \frac{1}{3} \\ 1 : sonst \end{cases} \quad \text{(Gl. 5)}$$

mit:

$T(x)$      := komplexe Transmission T(x) der Referenzmarkierungs-Abtaststruktur
$p_{AP}(X)$      := ortsabhängige Phasenfunktion der Referenzmarkierungs-Abtaststruktur auf der Abtastplatte
x      := Ortskoordinate entlang der Messrichtung

Ein Transmissionswert T(x) = -1 bedeutet hierbei für einen Teilungsbereich der Referenzmarkierungs-Abtaststruktur 14, dass dieser Teilungsbereich tiefgeätzt ausgebildet ist, so dass darüber eine Phasenverschiebung von 180° gegenüber nicht tiefgeätzten Teilungsbereichen bzgl. der durchlaufenden Strahlenbündel erreicht wird. Ein Transmissionswert T(x) = 0 wird in der Referenzmarkierungs-Abtaststruktur 14 durch das Aufbringen einer absorbierenden Schicht in einem entsprechenden Teilungsbereich erreicht.

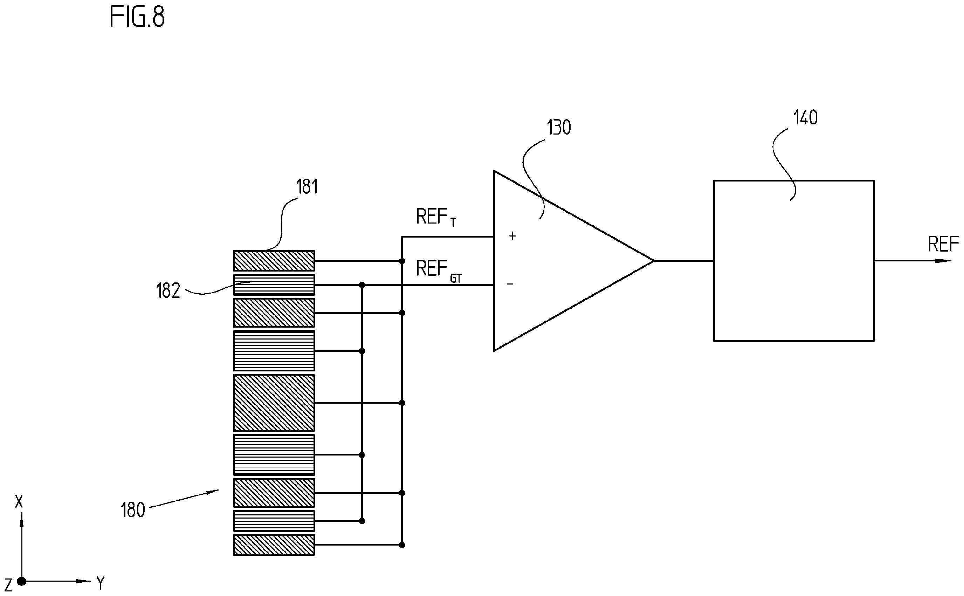

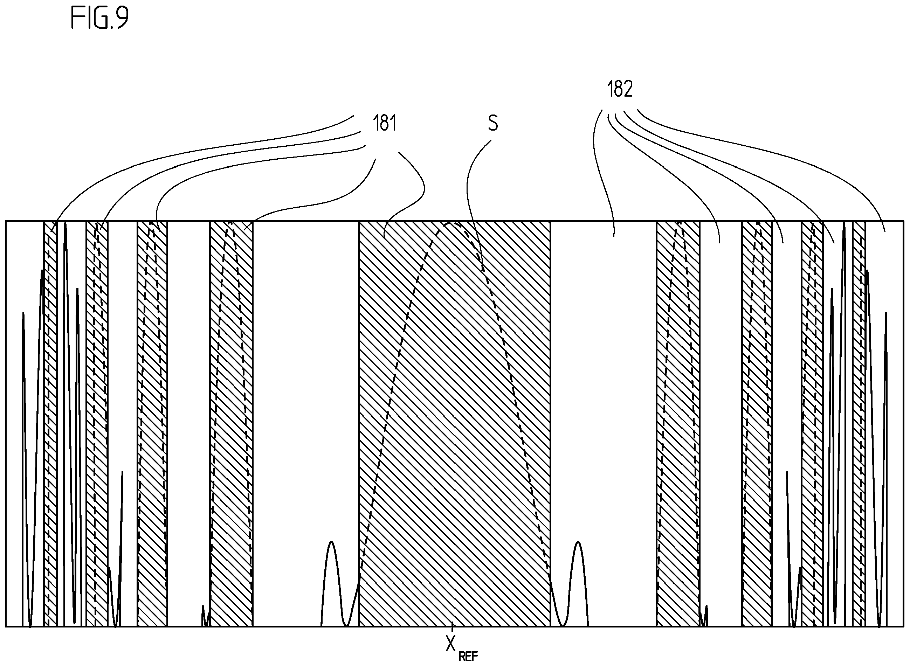

Ein zweites Ausführungsbeispiel er erfindungsgemäßen Positionsmesseinrichtung sei abschließend anhand der Figuren 8 und 9 erläutert. Diese zeigen analoge Darstellungen zu den Figuren 4 und 5 des ersten Ausführungsbeispiels, nämlich eine Draufsicht auf einen Teilbereich der Detektoranordnung sowie eine Darstellung des resultierenden Streifenmusters in der Detektionsebene in Verbindung mit einigen Detektorelementen. Nachfolgend wird lediglich auf die maßgeblichen Unterschiede zum vorher beschriebenen Ausführungsbeispiel eingegangen.

Als wesentlicher Unterschied zum ersten Ausführungsbeispiel ist hier vorgesehen, dass die Referenzsignal-Detektoranordnung 180 eine Vielzahl rechteckförmiger Detektorelemente 181, 182 umfasst, die in Messrichtung x aperiodisch angeordnet sind. Die lokale Detektor-Ortsfrequenz der Referenzsignal-Detektoranordnung 180 entspricht dabei der lokalen Differenzfrequenz zwischen der zweiten und dritten Gitter-Ortsfrequenzverteilung auf Seiten des Selbstabbilds und der Referenzmarkierung auf der Maßverkörperung. Um dies sicherzustellen, ist insbesondere wieder die Referenzmarkierungs-Abtaststruktur auf der Abtastplatte geeignet auszubilden.

Eine zu Figur 5 analoge Darstellung ist für das zweite Ausführungsbeispiel in Figur 9 gezeigt. Ersichtlich ist daraus wiederum das resultierende Streifenmuster S an der Referenzposition $X_{REF}$ sowie die den Signalmaxima und den Signalminima zugeordneten Detektorelemente 181, 182 der Referenzsignal-Detektoranordnung 180. Aus den verschalteten Detektorelementen 181 der ersten Gruppe resultiert das Referenz-Taktsignal $REF_T$, aus den verschalteten Detektorelementen 182 der zweiten Gruppe resultiert das Referenz-Gegentaktsignal $REF_{GT}$, die nach der Differenzverschaltung und der Signalkorrektur gemäß Figur 8 das Referenzsignal REF liefern.

Anstelle einer streng periodischen Anordnung von Detektorelementen kann in der erfindungsgemäßen Positionsmesseinrichtung demzufolge auch eine aperiodische Anordnung von Detektorelementen vorgesehen sein, wenn ein entsprechendes Streifenmuster in der Detektionsebene generiert wird. Als weiterer Vorteil einer derartigen Variante resultiert die Möglichkeit, Signalverlaufsformen zu verwenden, die einen besonders hohen Nutzsignalanteil besitzen.

Neben den konkret beschriebenen Ausführungsbeispielen existieren im Rahmen der vorliegenden Erfindung selbstverständlich noch weitere Ausgestaltungsmöglichkeiten.

So ist beispielsweise möglich, das erläuterte Prinzip sowohl bei Positionsmesseinrichtungen zur Erfassung von linearen Relativbewegungen als auch zur Erfassung von rotatorischen Relativbewegungen einzusetzen. Im letztgenannten Fall können Radialgitter-Maßverkörperungen ebenso wie bandförmige Maßverkörperungen verwendet werden.

Desweiteren kann nicht nur eine Auflicht-Positionsmesseinrichtung gemäß dem erläuterten Ausführungsbeispiel erfindungsgemäß ausgebildet werden, auch in Positionsmesseinrichtungen nach dem Durchlichtprinzip ist die vorliegende Erfindung realisierbar. In diesem Fall wäre die Maßverkörperung dann als Durchlicht-Amplitudengitter mit Teilungsbereichen unterschiedlicher Durchlässigkeit auszubilden. Die Beleuchtung der Abtastplatte könnte hier im Unterschied zur oben erläuterten Variante senkrecht erfolgen, was eine verbesserte Unempfindlichkeit gegenüber Schwankungen des Abtastabstands zur Folge hätte.

Ferner ist es möglich, anstelle der kombinierten Phasen-Amplituden-Abtaststrukturen auf der Abtastplatte Phasenstrukturen vorzusehen, die aus periodisch angeordneten Teilungsbereichen mit unterschiedlichen phasenschiebenden Wirkungen besteht. Die Teilungsbereiche weisen in diesem Fall ferner noch eine transversale Strukturierung auf und liefern in Transmission vorwiegend +/- 1. Beugungsordnungen.

**Patentansprüche**

1. Positionsmesseinrichtung zur Erfassung der Position von zwei relativ zueinander in mindestens einer Messrichtung (x) beweglichen Objekten mit

   - einer sich in Messrichtung (x) erstreckenden Maßverkörperung (20), die mit einem der beiden Objekte verbunden ist und mindestens eine Referenzmarkierung (22) an einer Referenzposition ($X_{REF}$) aufweist, wobei die Referenzmarkierung (22) aus einer sich in Messrichtung (x) erstreckenden Anordnung von Teilungsbereichen (22.1, 22.2, 14.1, 14.2, 14.3) mit ortsabhängig variierenden Teilungsperioden besteht,
   - einer Abtasteinheit (10), die mit dem anderen der beiden Objekte verbunden ist und eine Lichtquelle (11), eine Abtastplatte (13) und eine Referenzsignal-Detektoranordnung (18) umfasst, um mindestens ein Referenzsignal (REF) an der Referenzposition ($X_{REF}$) zu erzeugen, über das ein Absolutbezug für desweiteren erzeugte periodische Inkrementalsignale herstellbar ist und wobei die Abtastplatte (13) eine Referenzmarkierungs-Abtaststruktur (14) aufweist, die aus einer sich in Messrichtung (x) erstreckenden Anordnung von Teilungsbereichen (14.1, 14.2, 14.3) mit ortsabhängig variierenden Teilungsperioden besteht und wobei
   - die Anordnung der Teilungsbereiche (22.1, 22.2, 14.1, 14.2, 14.3) in der Referenzmarkierung (22) auf der Maßverkörperung (20) und in der Referenzmarkierungs-Abtaststruktur (14) der Abtastplatte (13) dergestalt gewählt ist, dass die Gitter-Ortsfrequenzverteilungen in der Referenzmarkierungs-Abtaststruktur (14) auf der Abtastplatte (13) und in der Referenzmarkierung (22) auf der Maßverkörperung (20) unterschiedlich sind und wobei
   - die Referenzmarkierungs-Abtaststruktur (14) eine erste Gitter-Ortsfrequenzverteilung aufweist und derart ausgebildet ist, dass aus der Wechselwirkung der von der Lichtquelle (11) emittierten Strahlenbündel mit der Referenzmarkierungs-Abtaststruktur (14) vorwiegend +/- 1. Beugungsordnungen resultieren, die überlagert auf der Maßverkörperung (20) ein Selbstabbild der Referenzmarkierungs-Abtaststruktur (14) mit einer zweiten Gitter-Ortsfrequenzverteilung erzeugen,

   **dadurch gekennzeichnet,**

   - **dass** die auf der Maßverkörperung (20) angeordnete Referenzmarkierung (22) eine dritte Gitter-Ortsfrequenzverteilung aufweist und
   - **dass** die Referenzmarkierungs-Abtaststruktur (14) und/oder die auf der Maßverkörperung (20) angeordnete Referenzmarkierung (14) derart ausgebildet sind, dass die zweite und dritte Gitter-Ortsfrequenzverteilung im Frequenzraum um eine bestimmte Differenzfrequenz ($f_v$) gegeneinander verschoben sind, so dass aus der optischen Wechselwirkung des Selbstabbilds der Referenzmarkierungs-Abtaststruktur (14) mit der Referenzmarkierung (22) in der Detektionsebene der Referenzsignal-Detektoranordnung (18) ein Streifenmuster mit einer periodischen Ortsfrequenzkomponente resultiert, wenn sich die Maßverkörperung (20) an der Referenzposition ($x_{REF}$) befindet, wobei die periodische Ortsfrequenzkomponente der Differenzfrequenz ($f_v$) entspricht.

2. Positionsmesseinrichtung nach Anspruch 1, **dadurch gekennzeichnet, dass** die Referenzmarkierungs-Abtaststruktur (14) als kombinierte Amplituden- und Phasenstruktur ausgebildet ist, die durchlässige, undurchlässige sowie definiert phasenschiebende Teilungsbereiche (14.1, 14.2, 14.3) aufweist.

3. Positionsmesseinrichtung nach Anspruch 1, **dadurch gekennzeichnet, dass** die Referenzmarkierungs-Abtaststruktur (14) derart ausgebildet ist, dass auf der Maßverkörperung (20) ein ortsfrequenzverdoppeltes Selbstabbild der Referenzmarkierungs-Abtaststruktur (14) resultiert.

4. Positionsmesseinrichtung nach mindestens einem der vorhergehenden Ansprüche, **dadurch gekennzeichnet, dass**

   - die Referenzmarkierung (22) zwei zu einer Referenzmarkierungs-Symmetrieachse ($S_M$) spiegelsymmetrisch ausgebildete Referenzmarkierungs-Teilfelder ($22_A$, $22_B$) umfasst und
- die Referenzmarkierungs-Abtaststruktur (14) zwei zu einer Abtaststruktur-Symmetrieachse ($S_A$) spiegelsymmetrisch ausgebildete Abtaststruktur-Teilfelder ($14_A$, $14_B$) umfasst.

**5.** Positionsmesseinrichtung nach Anspruch 1, **dadurch gekennzeichnet, dass** die Referenzsignal-Detektoranordnung (18) eine Vielzahl von rechteckförmigen Detektorelementen (18.1, 18.2) umfasst, die in Messrichtung (x) periodisch angeordnet sind, wobei die Detektor-Ortsfrequenz der Referenzsignal-Detektoranordnung (18) der Differenzfrequenz ($f_v$) zwischen der zweiten und dritten Gitter-Ortsfrequenzverteilung entspricht.

**6.** Positionsmesseinrichtung nach Anspruch 1, **dadurch gekennzeichnet, dass** die Referenzsignal-Detektoranordnung (18) eine Vielzahl von rechteckförmigen Detektorelementen umfasst, die in Messrichtung (x) aperiodisch angeordnet sind, wobei die lokale Detektor-Ortsfrequenz der Referenzsignal-Detektoranordnung der lokalen Differenzfrequenz zwischen der zweiten und dritten Gitter-Ortsfrequenzverteilung entspricht.

**7.** Positionsmesseinrichtung nach Anspruch 5 oder 6, **dadurch gekennzeichnet, dass** jedes zweite Detektorelement (18.1, 18.2) der Referenzsignal-Detektoranordnung (18) miteinander elektrisch verschaltet ist, wodurch eine erste Gruppe und eine zweite Gruppe von jeweils miteinander verschalteten Detektorelementen (18.1, 18.2) resultiert und über die erste Gruppe ein Referenz-Taktsignal ($REF_T$) und über die zweite Gruppe ein Referenz-Gegentaktsignal ($REF_{GT}$) erzeugbar ist.

**8.** Positionsmesseinrichtung nach Anspruch 7, **dadurch gekennzeichnet, dass** die Referenzsignal-Detektoranordnung (18) derart ausgebildet ist, dass an der Referenzposition ($x_{REF}$) die Detektorelemente (18.1) der ersten Gruppe ein Signalmaximum eines in der Detektionsebene der Referenzsignal-Detektoranordnung (18) resultierenden Streifenmusters erfassen und die Detektorelemente (18.2) der zweiten Gruppe ein Signalminimum des in der Detektionsebene der Referenzsignal-Detektoranordnung (18) resultierenden Streifenmusters erfassen.

**9.** Positionsmesseinrichtung nach Anspruch 7, **dadurch gekennzeichnet, dass** das Referenz-Taktsignal ($REF_T$) und das Referenz-Gegentaktsignal ($REF_{GT}$) miteinander in Differenz verschaltet sind und an der Referenzposition ($x_{REF}$) aus dem verschalteten Referenz-Taktsignal ($REF_T$) und dem Referenz-Gegentaktsignal ($REF_{GT}$) das Referenzsignal (REF) resultiert.

**10.** Positionsmesseinrichtung nach mindestens einem der vorhergehenden Ansprüche, **dadurch gekennzeichnet, dass** die Maßverkörperung (20) als Auflicht-Amplitudengitter ausgebildet ist und die Referenzmarkierung (22) alternierend angeordnete Teilungsbereiche (22.1, 22.2) unterschiedlicher Reflektivität umfasst.

**11.** Positionsmesseinrichtung nach mindestens einem der vorhergehenden Ansprüche, **dadurch gekennzeichnet, dass** auf der Maßverkörperung (20) desweiteren eine sich in Messrichtung (x) erstreckende Inkrementalteilung (21) angeordnet ist und die Abtasteinheit (10) Abtastmittel umfasst, um aus der Abtastung der Inkrementalteilung (21) ein oder mehrere positionsabhängige Inkrementalsignale zu erzeugen.

## Claims

**1.** Position measurement device for capturing the position of two objects which are movable relative to one another in at least one measurement direction (x), having

- a measuring standard (20) extending in the measurement direction (x), which measuring standard is connected to one of the two objects and has at least one reference mark (22) at a reference position ($x_{REF}$), wherein the reference mark (22) consists of an arrangement of graduation regions (22.1, 22.2, 14.1, 14.2, 14.3), extending in the measurement direction (x), having graduation periods that vary in dependence on the location,
- a scanning unit (10) that is connected to the other one of the two objects and comprises a light source (11), a scanning plate (13) and a reference-signal detector arrangement (18) to generate at least one reference signal (REF) at the reference position ($x_{REF}$), via which an absolute reference for any further generated periodic incremental signals is able to be produced and wherein the scanning plate (13) has a reference-mark scanning structure (14) which consists of an arrangement of graduation regions (14.1, 14.2, 14.3), extending in the measurement direction (x), having graduation periods that vary in dependence on the location, and wherein
- the arrangement of the graduation regions (22.1, 22.2, 14.1, 14.2, 19.3) in the reference mark (22) on the measuring standard (20) and in the reference-mark scanning structure (14) of the scanning plate (13) is selected such that the grating spatial frequency distributions in the reference-mark scanning structure (14) on the scanning plate (13) and in the reference mark (22) on the measuring standard (20) differ, and wherein

- the reference-mark scanning structure (14) has a first grating spatial frequency distribution and is configured such that, from the interaction of the beams emitted by the light source (11) with the reference-mark scanning structure (14), primarily +/-1 diffraction orders are obtained that generate, by being superposed onto the measuring standard (20), a self-image of the reference-mark scanning structure (14) having a second grating spatial frequency distribution, **characterized**

- **in that** the reference mark (22) arranged on the measuring standard (20) has a third grating spatial frequency distribution, and

- **in that** the reference-mark scanning structure (14) and/or the reference mark (14) arranged on the measuring standard (20) are configured such that the second and third grating spatial frequency distributions in the frequency domain are displaced with respect to one another by a specific difference frequency ($f_v$) such that a stripe pattern having a periodic spatial-frequency component is obtained from the optical interaction of the self-image of the reference-mark scanning structure (14) with the reference mark (22) in the detection plane of the reference-signal detector arrangement (18), if the measuring standard (20) is located at the reference position ($x_{REF}$), wherein the periodic spatial-frequency component corresponds to the difference frequency ($f_v$).

2. Position measurement device according to Claim 1, **characterized in that** the reference-mark scanning structure (14) is configured in the form of a combined amplitude and phase structure having graduation regions (14.1, 14.2, 14.3) that are transmissive, non-transmissive and phase-shifting in a defined manner.

3. Position measurement device according to Claim 1, **characterized in that** the reference-mark scanning structure (14) is configured such that a spatial-frequency-doubled self-image of the reference-mark scanning structure (14) is obtained on the measuring standard (20).

4. Position measurement device according to at least one of the preceding claims, **characterized in that**

- the reference mark (22) comprises two reference-mark graduation fields ($22_A$, $22_B$) that are configured to be mirror-symmetric with respect to a reference-mark symmetry axis ($S_M$), and
- the reference-mark scanning structure (14) comprises two scanning-structure graduation fields ($14_A$, $14_B$) that are configured to be mirror-symmetric with respect to a scanning-structure symmetry axis ($S_A$).

5. Position measurement device according to Claim 1, **characterized in that** the reference-signal detector arrangement (18) comprises a multiplicity of rectangular detector elements (18.1, 18.2) which are arranged periodically in the measurement direction (x), wherein the detector spatial frequency of the reference-signal detector arrangement (18) corresponds to the difference frequency ($f_v$) between the second and third grating spatial frequency distributions.

6. Position measurement device according to Claim 1, **characterized in that** the reference-signal detector arrangement (18) comprises a multiplicity of rectangular detector elements which are arranged aperiodically in the measurement direction (x), wherein the local detector spatial frequency of the reference-signal detector arrangement corresponds to the local difference frequency between the second and third grating spatial frequency distributions.

7. Position measurement device according to Claim 5 or 6, **characterized in that** every other detector element (18.1, 18.2) of the reference-signal detector arrangement (18) is electrically connected to one another, as a result of which a first group and a second group of respectively interconnected detector elements (18.1, 18.2) are obtained and a reference clock signal ($REF_T$) is able to be generated by the first group and a reference counter-clock signal ($REF_{GT}$) is able to be generated by the second group.

8. Position measurement device according to Claim 7, **characterized in that** the reference-signal detector arrangement (18) is configured such that at the reference position ($x_{REF}$), the detector elements (18.1) of the first group capture a signal maximum of a stripe pattern resulting in the detection plane of the reference-signal detector arrangement (18) and the detector elements (18.2) of the second group capture a signal minimum of the stripe pattern resulting in the detection plane of the reference-signal detector arrangement (18).

9. Position measurement device according to Claim 7, **characterized in that** the reference clock signal ($REF_T$) and the reference counter-clock signal ($REF_{GT}$) are differentially connected to one another and, at the reference position ($x_{REF}$), the reference signal (REF) is obtained from the connected reference clock signal ($REF_T$) and the reference counter-clock signal ($REF_{GT}$).

10. Position measurement device according to at least one of the preceding claims, **characterized in that** the measuring standard (20) is configured as a reflected-light amplitude grating and the reference mark (22) comprises graduation regions (22.1, 22.2) of different reflectivity which are arranged in alternation.

11. Position measurement device according to at least one of the preceding claims, **characterized in that** furthermore an incremental graduation (21) extending in the measurement direction (x) is arranged on the measuring standard (20), and the scanning unit (10) comprises scanning means in order to generate one or more position-dependent incremental signals from the scan of the incremental graduation (21).

**Revendications**

1. Dispositif de mesure de position destiné à détecter la position de deux objets mobiles l'un par rapport à l'autre dans au moins une direction de mesure (x), comprenant

    - un étalon (20) qui s'étend dans la direction de mesure (x), lequel est relié à l'un des deux objets et possède au moins un marquage de référence (22) au niveau d'une position de référence ($x_{REF}$), le marquage de référence (22) se composant d'un arrangement de zones de division (22.1, 22.2, 14.1, 14.2, 14.3) qui s'étendent dans la direction de mesure (x) avec des périodes de division qui varient en fonction de l'emplacement,
    - une unité de palpage (10) qui est reliée à l'autre des deux objets et qui comprend une source de lumière (11), une plaque de palpage (13) et un arrangement détecteur de signal de référence (18) afin de générer à la position de référence ($X_{REF}$) au moins un signal de référence (REF) par le biais duquel peut être établie une relation absolue pour des signaux incrémentaux périodiques générés en plus et la plaque de palpage (13) possédant une structure de palpage de marquage de référence (14) qui se compose d'un arrangement de zones de division (14.1, 14.2, 14.3) qui s'étendent dans la direction de mesure (x) avec des périodes de division qui varient en fonction de l'emplacement et
    - l'arrangement des zones de division (22.1, 22.2, 14.1, 14.2, 14.3) dans le marquage de référence (22) sur l'étalon (20) et dans la structure de palpage de marquage de référence (14) de la plaque de palpage (13) est choisi de telle sorte que les allotissements des fréquences spatiales de grille dans la structure de palpage de marquage de référence (14) sur la plaque de palpage (13) et dans le marquage de référence (22) sur l'étalon (20) sont différents et
    - la structure de palpage de marquage de référence (14) possédant un premier allotissement des fréquences spatiales de grille et étant configurée de telle sorte que des ordres de diffraction principalement de $\pm 1$ résultent de l'interaction du faisceau de rayons émis par la source de lumière (11) avec la structure de palpage de marquage de référence (14), qui, superposés à l'étalon (20), génèrent une image propre de la structure de palpage de marquage de référence (14) ayant un deuxième allotissement des fréquences spatiales de grille,

    **caractérisé**

    - **en ce que** le marquage de référence (22) disposé sur l'étalon (20) possède un troisième allotissement des fréquences spatiales de grille et
    - **en ce que** la structure de palpage de marquage de référence (14) et/ou le marquage de référence (14) disposé sur l'étalon (20) sont configurés de telle sorte que les deuxième et troisième allotissements des fréquences spatiales de grille sont décalés l'un par rapport à l'autre d'une fréquence différentielle ($f_v$) donnée dans l'espace des fréquences, de sorte qu'un modèle de bandes ayant une composante de fréquence spatiale périodique résulte de l'interaction optique de l'image propre de la structure de palpage de marquage de référence (14) avec le marquage de référence (22) dans le plan de détection de l'arrangement détecteur de signal de référence (18) lorsque l'étalon (20) se trouve à la position de référence ($X_{REF}$), la composante de fréquence spatiale périodique correspondant à la fréquence différentielle (fv).

2. Dispositif de mesure de position selon la revendication 1, **caractérisé en ce que** la structure de palpage de marquage de référence (14) est réalisée sous la forme d'une structure combinée d'amplitude et de phase qui possède des zones de division (14.1, 14.2, 14.3) transparentes, non transparentes ainsi que produisant un déphasage défini.

3. Dispositif de mesure de position selon la revendication 1, **caractérisé en ce que** la structure de palpage de marquage de référence (14) est configurée de telle sorte qu'il résulte une image propre doublée en fréquences spatiales de la structure de palpage de marquage de référence (14) sur l'étalon (20).

**4.** Dispositif de mesure de position selon au moins l'une des revendications précédentes, **caractérisé en ce que**

- le marquage de référence (22) comporte deux champs partiels de marquage de référence ($22_A$, $22_B$) configurés symétriquement par rapport à un axe de symétrie de marquage de référence ($S_M$) et
- la structure de palpage de marquage de référence (14) comporte deux champs partiels de structure de palpage ($14_A$, $14_B$) configurés symétriquement par rapport à un axe de symétrie de structure de palpage ($S_A$).

**5.** Dispositif de mesure de position selon la revendication 1, **caractérisé en ce que** l'arrangement détecteur de signal de référence (18) comprend une pluralité d'éléments détecteurs (18.1, 18.2) de forme rectangulaire qui sont disposés périodiquement dans une direction de mesure (x), la fréquence spatiale de détecteur de l'arrangement détecteur de signal de référence (18) correspondant à la fréquence différentielle ($f_v$) entre les deuxième et troisième allotissements des fréquences spatiales de grille.

**6.** Dispositif de mesure de position selon la revendication 1, **caractérisé en ce que** l'arrangement détecteur de signal de référence (18) comprend une pluralité d'éléments détecteurs de forme rectangulaire qui sont disposés de manière apériodique dans la direction de mesure (x), la fréquence spatiale de détecteur de l'arrangement détecteur de signal de référence correspondant à la fréquence différentielle locale entre les deuxième et troisième allotissements des fréquences spatiales de grille.

**7.** Dispositif de mesure de position selon la revendication 5 ou 6, **caractérisé en ce que** chacun des deuxièmes éléments détecteurs (18.1, 18.2) de l'arrangement détecteur de signal de référence (18) sont interconnectés électriquement entre eux, ce qui résulte en un premier groupe et un deuxième groupe d'éléments détecteurs (18.1, 18.2) respectivement interconnectés entre eux et un signal d'horloge de référence ($REF_T$) peut être généré par le biais du premier groupe et un signal symétrique de référence ($REF_{GT}$) par le biais du deuxième groupe.

**8.** Dispositif de mesure de position selon la revendication 7, **caractérisé en ce que** l'arrangement détecteur de signal de référence (18) est configuré de telle sorte qu'à la position de référence ($X_{REF}$), les éléments détecteurs (18.1) du premier groupe détectent un maximum de signal d'un modèle de bandes résultant dans le plan de détection de l'arrangement détecteur de signal de référence (18) et les éléments détecteurs (18.2) du deuxième groupe détectent un minimum de signal du modèle de bandes résultant dans le plan de détection de l'arrangement détecteur de signal de référence (18).

**9.** Dispositif de mesure de position selon la revendication 7, **caractérisé en ce que** le signal d'horloge de référence ($REF_T$) et le signal symétrique de référence ($REF_{GT}$) sont interconnectés entre eux en différence et le signal de référence (REF) résulte du signal d'horloge de référence ($REF_T$) et du signal symétrique de référence ($REF_{GT}$) interconnectés à la position de référence ($X_{REF}$).

**10.** Dispositif de mesure de position selon au moins l'une des revendications précédentes, **caractérisé en ce que** l'étalon (20) est réalisé sous la forme d'une grille d'amplitude à lumière incidente et le marquage de référence (22) possède des zones de division (22.1, 22.2) disposées en alternance ayant des réflectivités différentes.

**11.** Dispositif de mesure de position selon au moins l'une des revendications précédentes, **caractérisé en ce qu'**une division incrémentale (21) qui s'étend dans la direction de mesure (x) est en outre disposée sur l'étalon (20) et l'unité de palpage (10) comporte des moyens de palpage pour générer un ou plusieurs signaux incrémentaux dépendants de la position à partir du palpage de la division incrémentale (21).

FIG.1

FIG.2

FIG.3b

FIG.3a

FIG.4

FIG.5

EP 2 963 391 B1

FIG.6

EP 2 963 391 B1

FIG.7

FIG.8

EP 2 963 391 B1

FIG.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 513427 A1
- DE 4212281
- EP 0513427 A1
- EP 1081457 A2
- EP 1082457 A2